# EUROPEAN PATENT SPECIFICATION

(11) **EP 3 590 707 B1**
(45) Date of publication and mention of the grant of the patent: **26.01.2022**
(21) Application number: 18761367.4
(22) Date of filing: 01.02.2018
(51) Int. Cl.: B32B 13/12, B32B 17/10, B32B 5/02, B32B 13/04, B32B 13/14, E04C 2/288

(54) **FIREPROOF, NON-TOXIC DECORATIVE PANEL FOR INDOOR AND/OR OUTDOOR USE**
FEUERFESTE NICHT-TOXISCHE DEKORPLATTE FÜR DEN INNEN- UND/ODER AUSSENEINSATZ
PANNEAU DÉCORATIF IGNIFUGE ET ATOXIQUE POUR USAGE EN INTÉRIEUR ET/OU EN EXTÉRIEUR

(30) Priority: 28.02.2017 ES 201730265
(43) Date of publication of application: 08.01.2020
(73) Proprietor: Leva Candela, Jose Juan, 03802 Alcoy (Alicante) (ES)
(72) Inventor: Leva Candela, Jose Juan, 03802 Alcoy (Alicante) (ES)
(74) Representative: Maldonado Jordan, Julia
(86) International application number: PCT/ES2018/070077
(87) International publication number: WO 2018/158475

(56) References cited:
- WO-A1-2005/084941
- CN-A- 104 695 663
- ES-A1- 2 294 955
- ES-A1- 2 353 294
- ES-A1- 2 380 658
- FR-A1- 2 486 570
- DATABASE WPI Thomson Scientific, London, GB; AN 2013-M82233 & CN 202 831 495 U (NANJING JINGYEDA NEW BUILDING MATERIALS CO LTD) 27 March 2013 (2013-03-27)
- DATABASE WPI Thomson Scientific, London, GB; AN 2013-D23827 & CN 102 797 335 A (NANJING JINGYEDA NEW BUILDING MATERIALS CO LTD) 28 November 2012 (2012-11-28)
- DATABASE WPI Thomson Scientific, London, GB; AN 2015-26010B & CN 204 199 585 U (ZHONGTIAN JOINT ENERGY SAVING CONSTRUCTION DEV TIANJIN CO LTD) 11 March 2015 (2015-03-11)
- DATABASE WPI Thomson Scientific, London, GB; AN 2016-546541 & CN 205 399 886 U (SEDANT ROBA ENERGY-EFFICIENT MAT TECH CO LTD) 27 July 2016 (2016-07-27)

## Description

### Object of the Invention

The object of the present specification is a fireproof and non-toxic decorative panel for interior and/or exterior use, the main distinctive feature of which lies in its fireproof and non-toxic nature, using water-based materials, said panel being able to be used interchangeably both in interior spaces (as a decorative and/or constructive element for commercial and domestic spaces) and exterior spaces, experiencing less degradation than current decorative elements.

### Background of the Invention

Nowadays, the state of the art provides various known constructive and/or decorative solutions in the form of panels using polyurethane as their most characteristic forming element.

In that sense, the same applicant of the invention herein proposed is the proprietor of Spanish patent ES 2 199 071, which describes a prefabricated polyurethane panel consisting of the polyol and isocyanate mixture in a mould previously covered with iron oxides and mortars for ceramic joints, with paint being subsequently applied for release of same from the mould, the assembly being kept in the mould at a temperature ranging between 20 and 25 degrees Centigrade for 15 minutes, where a hydrolysed varnish can subsequently be applied.

Spanish patent ES 2 380 658 defines a series of improvements introduced in the previous patent, and more specifically, in said specification it is mentioned that the prefabricated polyurethane panel consists of the polyol and isocyanate mixture in a mould previously covered with iron oxides and mortars with ceramic joints, and with paint being subsequently applied for removal of same from the mould, the assembly being kept in the mould at a temperature ranging between 20ºC and 25ºC for fifteen minutes, where a hydrolysed varnish can subsequently be applied, the polyurethane panel incorporating an adhesive sheet of polyvinyl chloride foam on one of its faces, such that said sheet allows obtaining an adhesive prefabricated polyurethane panel, with the subsequent advantages it entails during the assembly process.

Likewise, Spanish patent ES 2 294 955 is known, which describes a method of obtaining a prefabricated panel for interior and exterior decoration, wherein a silicone, resin, or metal mould is made on a surface of the material to be reproduced using the decorative panel, such as for example a surface of bricks, natural stone, etc. A release agent and then a layer of iron-oxide based pigmentation or any other type of pigments suited to the material to be reproduced are applied to said mould. Next, an acrylic polymer and calcium sulphate mixture is introduced in a mould, being spread uniformly until achieving a thickness comprised between 2 and 10 mm. Finally, the mould is filled with expanded polyurethane to compact the panel. A panel with large dimensions having the same appearance as the fireproof material with a high thermal and acoustic efficiency that it seeks to reproduce is thereby achieved.

Finally, Spanish patent ES 2 396 111 describes a method of manufacturing an insulating natural stone panel and the panel obtained with said method, which panel is applicable as an interior or exterior covering element and consists of a planar body formed from a natural stone laminate between two and six millimetres thick, incorporating on its non-exposed rear face a layer of polyurethane, which method comprises the following manufacturing steps:
- Making a silicone mould having the appropriate dimensions.
- Manually or mechanically filling said silicone mould with liquid polyurethane.
- After the polyurethane sets, incorporating the natural stone laminate.
- Closing the upper part of the mould and acting on same by applying pressure through a press.

None of the mentioned documents nor those documents known in the state of the art defines a completely fireproof and/or non-toxic decorative panel for exteriors or interiors, as a result of the (water-based) elements which form it and allow the invention described herein to become a particularly useful element in establishments where the public gathers (such as restaurants, shops, or the like) or other public spaces (outpatient clinics or hospitals), where its fireproof properties are necessary and/or vital for preventing possible accidents resulting in the loss of human lives.

### Description of the invention

The technical problem solved by the present invention is to achieve a decorative panel that can be used for covering or as a constructive element *per se,* which can be installed both in exteriors and in interiors. To that end, the fireproof and non-toxic decorative panel for interior and/or exterior use, object of the present invention, comprising a first layer formed by a layer of iron oxides and mortars applied manually in a horizontal and transverse manner, forming a compact block, wherein the exposed face thereof incorporates the shape and/or motif of the decorative element and wherein there are added to said layer a second layer formed by a water-based acrylic polymer mixture mixed with calcium sulphate hemihydrate (CaSO₄ 0.5H₂O), a third layer formed by a triaxial glass fibre sheet; and finally a fourth layer formed by the water-based acrylic polymer mixture mixed with calcium sulphate hemihydrate (CaSO₄ 0.5H₂O).

As a result of the water-based materials forming it, the panel herein described will be completely fireproof and/or non-toxic, i.e., it will serve as fire protection means, and will not give off toxic volatile substances that can affect people passing through, working, or living in those sites where it is installed.

Likewise, the use of triaxial glass fibre provides the panel with mechanical impact resistance features which no other panel known in the state of the art presents.

This is extremely important given that the presence of toxic volatile substances in decorative elements today is something that the owners of public premises try to avoid at all cost, because on one hand, it could lead to scaring off customers (for example, in a restaurant) and/or lawsuits that could result in fines, for example, lodged by the employees of a business.

This can be solved by implementing the panel herein described, which panel prevents this aspect as a result of using non-toxic materials. This makes the panel a highly versatile decorative medium because of its use simplicity, and a medium that is safer than other similar solutions which use polyester fibres, for example.

Throughout the description and claims the word "comprises" and variants thereof do not seek to exclude other technical features, additions, components, or steps. For those skilled in the art, other objects, advantages, and features of the invention will be inferred in part from the description and in part from practice of the invention. The following examples and drawings are provided by way of illustration and do not seek to limit the present invention. Furthermore, the present invention covers all the possible combinations of particular and preferred embodiments herein indicated.

### Brief Description of the Drawings

A series of drawings which help to better understand the invention and which expressly relate to an embodiment of said invention presented as a non-limiting example thereof is very briefly described below.

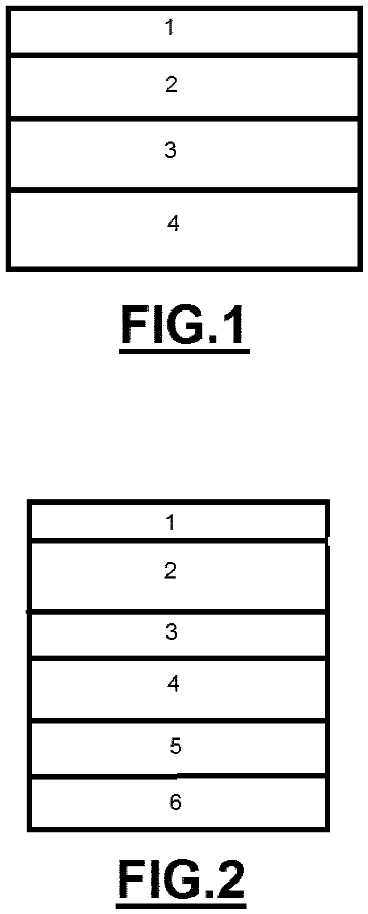

Figure 1 shows a schematic view of a section of the fireproof and non-toxic decorative panel for interior and/or exterior use, object of the present invention.
Figure 2 shows a schematic view of a second practical embodiment of the decorative panel herein described.

### Preferred Embodiment of the Invention

The attached drawings show a preferred embodiment of the invention. More specifically, the fireproof and non-toxic decorative panel for interior and/or exterior use object of the present specification is characterised by comprising a first layer (1) formed by a layer of iron oxides and mortars applied manually in a horizontal and transverse manner, wherein the exposed face thereof incorporates the shape and/or motif of the decorative element and wherein there are added to said layer (1) a second layer (2) formed by a water-based acrylic polymer mixture mixed with calcium sulphate hemihydrate (CaSO₄ 0.5H₂O), providing the composite panel with fireproof and non-toxic properties, which is bound to a third layer (3) formed by a triaxial glass fibre sheet, and finally a fourth layer (4) formed by the water-based acrylic polymer mixture mixed with calcium sulphate hemihydrate (CaSO₄ 0.5H₂O).

In various particular embodiments, the panel may incorporate a fifth layer (5) based on a triaxial glass fibre sheet and a sixth layer (6) of polymer like the one used in layers (2, 4). The panel is therefore scalable by means of bonding thereto more layers of glass fibre and polymer.

The water-based acrylic polymer will incorporate individual residual monomers (<0.1), ammonium hydroxide, and water, wherein said water incorporates in a preferred embodiment a small amount of surface-active agent, plasticiser, and thickener. At the same time, the calcium sulphate hemihydrate may incorporate plasticisers and small amounts of discs made of aluminium glass, silicas, dolomite, and granite particles.

The acrylic polymer of the second layer (2) will have a vapour density <1 water, a vapour pressure of 2266.5 Pa at 20ºC, a melting point of 0ºC, and a boiling point of 100ºC, being dilutable in water.

The calcium sulphate hemihydrate (CaSO₄ 0.5H₂O) will have ph 8.4, a relative density of 2.75, a water solubility of 6.5 g/l, and a melting point of 1610ºC.

In a particular embodiment, a series of recesses are made in the obtained panel to provide it with a tongue and groove configuration, facilitating the placement thereof.

## Claims

1. A fireproof and non-toxic decorative panel for interior and/or exterior use, **characterised in that** it includes a first layer (1) formed by a layer of iron oxides and mortars applied manually in a horizontal and transverse manner, forming a compact block, wherein the exposed face thereof incorporates the shape and/or motif of the decorative element and wherein there are added to said layer (1) a second layer (2) formed by a water-based acrylic polymer mixture mixed with calcium sulphate hemihydrate (CaSO₄ 0.5H₂O a third layer (3) formed by a triaxial glass fibre sheet, and finally a fourth layer (4) formed by the water-based acrylic polymer mixture mixed with calcium sulphate hemihydrate (CaSO₄ 0.5H₂O).

2. The panel according to claim 1, wherein said panel incorporates a fifth layer (5) comprising a triaxial glass fibre sheet.

3. The panel according to any of claims 1 to 2, wherein said panel incorporates a sixth layer of water-based acrylic polymer mixed with calcium sulphate hemihydrate (CaSO₄ 0.5H₂O).

4. The panel according to any of claims 1 to 3, wherein the water-based acrylic polymer incorporates individual residual monomers (<0.1), ammonium hydroxide, and water, and wherein said water in turn incorporates surface-active agents, plasticisers, and thickeners.

5. The panel according to any of claims 1 to 3, wherein the acrylic polymer of the second layer (2) has a vapour density <1 water, a vapour pressure of 2266.5 Pa at 20ºC, a melting point of 0ºC, and a boiling point of 100ºC, being dilutable in water.

6. The panel according to any of claims 1 to 4, wherein the calcium sulphate hemihydrate (CaSO₄ 0.5H₂O) will have pH 8.4, a relative density of 2.75, a water solubility of 6.5 g/l, and a melting point of 1610ºC.

7. The panel according to any of the preceding claims, wherein the obtained panel incorporates a series of recesses to provide it with a tongue and groove configuration, facilitating the placement thereof.

## Patentansprüche

1. Feuerfeste und ungiftige dekorative Platte zur Verwendung im Innen- und/oder Außenbereich, **dadurch gekennzeichnet, dass** sie eine erste Schicht (1) umfasst, die aus einer Schicht aus Eisenoxiden und Mörteln gebildet wird, die von Hand horizontal und quer aufgetragen wird und einen kompakten Block bildet, wobei dessen freiliegende Fläche die Form und/oder das Motiv des dekorativen Elements aufnimmt, und wobei zu der Schicht (1) eine zweite Schicht (2), die aus einer Acrylpolymermischung auf Wasserbasis, gemischt mit Calciumsulfat-Halbhydrat (CaS0₄·½H₂0), gebildet wird, eine dritte Schicht (3), die durch eine triaxialen Glasfasermatte gebildet wird, und schließlich eine vierte Schicht (4), die aus der Acrylpolymermischung auf Wasserbasis, gemischt mit Calciumsulfat-Halbhydrat (CaS0₄·½H₂0), gebildet wird, hinzugegeben wird.

2. Platte nach Anspruch 1, wobei die Platte eine fünfte Schicht (5) aufnimmt, die eine triaxiale Glasfasermatte umfasst.

3. Platte nach einem der Ansprüche 1 bis 2, wobei die Platte eine sechste Schicht aus einem Acrylpolymer auf Wasserbasis, gemischt mit Calciumsulfat-Halbhydrat (CaS0₄·½H₂0), aufnimmt.

4. Platte nach einem der Ansprüche 1 bis 3, wobei das Acrylpolymer auf Wasserbasis einzelne Restmonomere (<0,1), Ammoniumhydroxid und Wasser aufnimmt, und wobei das Wasser wiederum oberflächenaktive Mittel, Weichmacher und Verdickungsmittel aufnimmt.

5. Platte nach einem der Ansprüche 1 bis 3, wobei das Acrylpolymer der zweiten Schicht (2) eine Dampfdichte <1 von Wasser, einen Dampfdruck von 2266,5 Pa bei 20 °C, einen Schmelzpunkt von 0 °C und einen Siedepunkt von 100 °C aufweist und in Wasser verdünnbar ist.

6. Platte nach einem der Ansprüche 1 bis 4, wobei das Calciumsulfat-Halbhydrat (CaS0₄·½H₂0) einen pH-Wert von 8,4, eine relative Dichte von 2,75, eine Wasserlöslichkeit von 6,5 g/l und einen Schmelzpunkt von 1610 °C aufweist.

7. Platte nach einem der vorhergehenden Ansprüche, wobei die erhaltene Platte eine Reihe von Ausnehmungen aufweist, um sie mit einer Nut- und Feder-Konfiguration zu versehen, die das Anbringen der Platte erleichtert.

## Revendications

1. Panneau décoratif ignifuge et non toxique pour une utilisation en intérieur et/ou en extérieur, **caractérisé par le fait qu'**il comprend une première couche (1) formée par une couche d'oxydes de fer et de mortiers appliquée manuellement d'une manière horizontale et transversale, formant un bloc compact, dans lequel la face exposée de celui-ci incorpore la forme et/ou le motif de l'élément décoratif, et dans lequel sont ajoutées à ladite couche (1) une deuxième couche (2) formée par un mélange de polymère acrylique à base aqueuse mélangé à du sulfate de calcium hémihydraté (CaSO₄ 0,5 H₂O), une troisième couche (3) formée par une feuille en fibre de verre triaxiale, et enfin une quatrième couche (4) formée par le mélange de polymère acrylique à base aqueuse mélangé à du sulfate de calcium hémihydraté (CaSO₄ 0,5 H₂O).

2. Panneau selon la revendication 1, dans lequel ledit panneau incorpore une cinquième couche (5) comprenant une feuille de fibre de verre triaxiale.

3. Panneau selon l'une quelconque des revendications 1 et 2, dans lequel ledit panneau incorpore une sixième couche de polymère acrylique à base aqueuse mélangé à du sulfate de calcium hémihydraté (CaSO₄ 0,5 H₂O).

4. Panneau selon l'une quelconque des revendications 1 à 3, dans lequel le polymère acrylique à base aqueuse incorpore des monomères résiduels individuels (< 0,1), de l'hydroxyde d'ammonium et de l'eau, et dans lequel ladite eau incorpore à son tour des agents tensioactifs, des plastifiants et des épaississants.

5. Panneau selon l'une quelconque des revendications 1 à 3, dans lequel le polymère acrylique de la deuxième couche (2) a une densité de vapeur < 1 eau, une pression de vapeur de 2266,5 Pa à 20 °C, un point de fusion de 0 °C, et un point d'ébullition de 100 °C, étant diluable dans l'eau.

6. Panneau selon l'une quelconque des revendications 1 à 4, dans lequel le sulfate de calcium hémihydraté (CaSO₄ 0,5 H₂O) aura un pH de 8,4, une densité relative de 2,75, une solubilité dans l'eau de 6,5 g/l et un point de fusion de 1610 °C.

7. Panneau selon l'une quelconque des revendications précédentes, dans lequel le panneau obtenu incorpore une série d'évidements pour lui donner une configuration à languettes et rainures, facilitant la mise en place de celui-ci.
